# EUROPEAN PATENT SPECIFICATION

(11) **EP 3 340 533 B1**
(45) Date of publication and mention of the grant of the patent: **11.11.2026**
(21) Application number: 16206096.6
(22) Date of filing: 22.12.2016
(51) Int. Cl.: H04L 41/0806, H04L 41/12

(54) **MAIN DEVICE FOR USE IN A COMPUTER NETWORK, COMPUTER NETWORK, METHOD FOR CONFIGURING A COMPUTER NETWORK AND COMPUTER PROGRAM**
HAUPTVORRICHTUNG ZUR VERWENDUNG IN EINEM COMPUTERNETZWERK, COMPUTERNETZWERK, VERFAHREN ZUR KONFIGURATION EINES COMPUTERNETZWERKS UND COMPUTERPROGRAMM
DISPOSITIF PRINCIPAL DESTINÉ À ÊTRE UTILISÉ DANS UN RÉSEAU INFORMATIQUE, RÉSEAU INFORMATIQUE, PROCÉDÉ DE CONFIGURATION D'UN RÉSEAU INFORMATIQUE ET PROGRAMME INFORMATIQUE

(43) Date of publication of application: 27.06.2018
(73) Proprietor: Electro Voice Dynacord B.V., 5651 GW Eindhoven (NL)
(72) Inventor: Smaak, Marc, 4614JR Bergen op Zoom (NL); De Brouwer, Tom, 4812XG Breda (NL); Van Tienen, Stephan, 4615CA Bergen op Zoom (NL)
(74) Representative: Winter, Brandl - Partnerschaft mbB

(56) References cited:
- EP-A1- 2 424 237
- EP-A1- 2 518 940
- US-A1- 2009 116 404

## Description

### Technical field

The invention provides a main device for use in a computer network, wherein the computer network has a topology and comprises a number of devices, wherein each of the devices comprises device information and at least one network port, wherein the devices are interconnected with the network by network links, each link connecting to respective network ports, wherein the main device is interconnected with at least one device by a connection, whereby the main device is adopted to obtain network information, whereby the network information comprises topology and device information of devices in the network.

### Background art

Computer networks are collections of devices and/or computers interconnected by communication channels. These channels allow for sharing of resources and information. Computer networks consist of many individual devices, whereby the devices are connected and forming a specific network topology. The devices and/or computers are usually configured to correctly fulfill the requested task for the user. This configuration can be different for each individual device.

The document EP 2424237 A1 describes a device for use in a digital conference system, wherein the device has a first and a second port in connection with each other and comprises configuration means for configuring, on receipt of a trigger signal, either the first or the second port as input port of the device and the other port as output port. The device is preferably a delegate unit or an extension unit.

The document EP 2 518 940 A1, which forms the closest state of the art, discloses a method and a system for an automatic network topology detection. A central monitoring system with a monitoring system server and monitoring probes is connected with network interfaces of network elements. The monitoring system captures data of the elements, wherein this data are passed to the monitoring server. A central device is detecting the topology of the network.

### Disclosure of the invention

According to the invention, a main device for use in a network is suggested, especially for a computer network. The invention also concerns a computer network according to claim 4, a method for configuring a computer network with devices according to claim 10 and a computer program according to claim 11.

The invention describes a main device for use in a computer network. The main device is preferably a computer, a tablet, a phablet, a media device, any embedded device or any other application unit. The computer network is preferably a local network, for example a local area network (LAN), or a non-local network like a global area network. Preferably, the computer network comprises several main devices.

The computer network comprises a number of devices and has a topology. Particularly the devices together with the main device are forming the topology. Preferably, the computer network comprises more than ten devices, especially more than twenty devices and particularly more than one hundred devices. The computer network is for example an Ethernet network. Particularly, the devices are computers, sensors, actors, server, printers, media devices and/or delegate units. In special, the devices of the computer network are from the same type and/or from different types.

Each of the devices comprise at least one network port. Preferably, each of the devices comprise a number of network ports, for example more than two network ports. The network port may be a cable interface, for example an Ethernet port, a BNC-connector or a fiber optic cable connector. Alternatively, the network port is a wireless interface, like a Wifi or other wireless interface. The devices are interconnected with the network by network links. Each link is connected to respective network ports. Particularly, the interconnected devices form the computer network. The network links are especially cables, for example twisted pair cables. Alternatively, the network links are wireless links like a Wi-Fi-link between the devices. The interconnection between the devices is adopted for a data exchange between the devices.

Particularly, the layout of the computer network is referred as the topology. Preferably, the computer network is a subset and/or part of a larger computer network, whereby the topology is at least a part of the topology of the larger computer network. Especially, the topology is the arrangement of the devices and/or the main device of the computer network. The topology especially comprises a physical topology, whereby the physical topology is the placement of the devices of the computer network, including the device location and network link installation. The topology may also comprise a logical topology, whereby the logical topology illustrates how data flows within the computer network, regardless of the physical design.

The main device is interconnected with at least one of the devices by a connection. Preferably, the connection is also a network link, for example a cable link. Alternatively, the connection between main device and at least one of the devices may be an internet connection. Especially the connection between main device and at least one of the devices may be a direct connection, alternatively the connection between the device and main device may be an interact connection, whereby for example the indirect connection comprises an interstation.

The main device might also be interconnected with a least one of the other main devices by a connection. Preferably, the connection is also a network link, for example a cable link. Alternatively, the connection between main device and at least one of the devices may be an internet connection. Especially the connection between main device and at least one of the devices may be a direct connection, alternatively the connection between the device and main device may be an interact connection, whereby for example the indirect connection comprises an interstation.

The main device is adopted to obtain network information. Especially the connection between the main device and the devices is obtained to exchange data, whereby the data exchange between the main device and the devices is used for obtaining the network information. For example, the main device is adopted to obtain network information from each of the devices in the computer network. The network information comprises the topology and the device information of the devices in the network. Especially, the network information comprises a local topology, wherein the local topology is preferably the topology around the device, whereby all the local typologies of all devices in the computer network may be used to get the topology of the whole computer network. The device information may comprise the local topology. Especially the device information comprises configuration data of the device and/or comprises information about what kind of device the device is. Particularly, the device information also comprises information about the network ports and/or the capabilities of the device.

The main device comprises a network model. Especially, the network model is stored in the main device, whereby the main device comprises a data carrier for storing the network model. The network model comprises a defined topology and defined device information. The defined topology is for example a given, adjusted, automatically learned and/or configured topology of the computer network, for example a user configured topology. Alternatively, the defined topology is the topology of the past, for example the topology obtained at initialization of the computer network. The defined device information is maybe a user defined device information and/or given device information. Alternatively, the defined device information are the device information obtained in the initialization of the computer network.

The main device comprises a comparison unit. The comparison unit is adopted to compare the network information with the network model to provide differences between the network information and the network model as distinction data. Preferably, the comparison unit is adopted to compare the defined topology with the topology of the network information. Especially, the comparison unit is adopted to compare the defined topology with the actual topology. Particularly the comparison unit is adopted to compare the defined device information with the device information of the network information especially with the actual device information. In particular, the comparison unit is adopted to compare the defined device information of each of the devices with the actual device information of each and/or the respecting device information. The distinction data therefore particularly comprise the differences in the topology and/or the differences in the device information of the devices. Particularly, the distinction data associates the differences in the topology to the respecting device information.

Advantage of the invention is the supply of at least one main device that is able to report fast and error-secure the differences between a defined topology and a defined device information and the actual topology and/or the actual device information.

Advantageously, the device information contains a unique address of the device. Preferably, the network information contains all unique addresses of the devices of the computer network. Particularly, the unique address of the device is a worldwide unique address, especially an address, that is defined when the device is produced. For example, the computer network is an Ethernet network, wherein the unique address is a MAC address. Preferably, the network information comprises a defined unique address for each device, whereby the comparison unit is adopted to compare the actual unique addresses and/or the unique addresses of the network information with the unique addresses in the network model. Advantage of this embodiment is, that the comparison of MAC addresses and/or unique addresses enable a fast obtaining of distinction data.

The main device comprises a detection unit. The detection unit is adopted to detect based on the distinction data a new device in the computer network. Especially, the detection unit is adopted to detect based on the distinction data all new devices and/or changed devices in the computer network. Particularly, the detection unit is adopted to detect chances in the device information, e.g. a change in the configuration data. Particularly, the detection unit is adopted to detect based on detected differences in the topology, detected differences in the device information and/or detected differences in the unique addresses of the devices, a new device and/or all new devices in the computer network. Preferably, a device with changed device information is also seen as a new device. Benefit of this embodiment is, that a quick and fast detection of new devices in the computer network is possible just based on the distinction data.

The detection unit is adopted to ascertain based on the distinction data if the new device is a replacement device or an extension device. Especially, the detection unit is adopted to ascertain based on the local topology around a device, if the device related to the local topology is a replacement device or an extension device. For example, a device with a changed unique address and/or changed device information is a replacement device, if the local topology around this device is the same topology as for a device in the defined topology. For example, the distinction data contains the information about the network ports and/or which network port of which device is connected to which network port of another device. A new device, which has no local topology that is similar or equal to a local topology in the defined topology, is seen as a new device. For example, a first device is able to detect the unique address of its neighbors and to send it to the main device, whereby the main device is operable to detect, if a new device is a replacement for a device based on the unique addresses of the neighbors of the devices. Benefit of this embodiment is to detect, if changes in a computer network are an extension of the computer network or a replacement of devices.

The defined device information comprises configuration data. The configuration data for example contain the configuration of the device according to its nature and chief characteristics. Especially, the configuration data contain the settings of the characteristics of the device. Preferably, the configuration data is a collection of the data that has to be adjusted by a user, before and/or to use the device in the computer network. Preferably, the main device comprises a configuration unit. The configuration unit is adopted to import the defined configuration data to the replacement device. Alternatively, the configuration unit is located in the device for auto configuration. Especially, the configuration unit is adopted to import the configuration data to all of the replaced devices in the computer network. Especially, the configuration unit is adopted to import the assigned configuration data of the defined device information to the corresponding replacement device.

At least one device of the devices in the computer network is a main device. Preferably, all devices of the computer network are main devices. Benefit of this embodiment is a decentral intelligence, whereby more than one device in the computer network is operable to detected changes in the computer network.

According to the invention, a computer network according to claim 4 is suggested. The computer network comprises a main device and a number of devices, especially more than ten devices. Each of the devices comprises device information and at least one network port. The devices are interconnected with the network by network links, each link connecting to respective network ports. The connected devices are forming the computer network, whereby the computer network has a topology. The topology is preferably defined by the physical and/or logical arrangement of the devices.

The main device is interconnected with at least one of the devices by a connection. The connection is preferably a cable connection, alternatively the connection is a wireless connection. The main device is adopted to obtain network information, whereby the network information comprises device information and the topology of the computer network. Device information comprise preferably the configuration of the device, the information about the ports of the device and information about which port of the device is connected with which port of another of the devices. Preferably, the device information comprises the information about the local topology around the device. The main device comprises a network model, whereby the network model comprises a defined topology and a defined device information. Preferably the network model comprises the device information of all devices of the computer network. The defined topology and/or the defined device information are preferably the topology and the device information after initialization or after initialization of the computer network. The main device comprises a comparison unit, whereby the comparison unit is adopted to compare the network information with a network model to provide the differences between the network information and the network model as distinction data.

Advantage of the invention is to provide a computer network that is able to provide and/or detect differences between the actual computer network and the computer network at a previous time, for example at the initialization of the computer network.

In a preferred embodiment of the invention each of the devices has a unique address. Preferably the unique address of the devices is a MAC address. The devices are adopted to detect the unique address of its neighbors and/or to detect the local topology around itself, especially the local topology together with the unique addresses of the neighbors. The device information of the devices contains its own unique address and the unique addresses of its neighbors and/or the local topology together with the unique addresses of the local topology. Preferably, the devices are adopted to provide the device information, especially the unique address of itself and the unique addresses of its neighbors, to the main device. Preferably the comparison unit is adopted to provide differences between the unique addresses of the devices and the defined unique addresses, for example at the point of initialization of the computer network. Benefit of this embodiment is, that for detecting differences in the computer network unique addresses, like the MAC address, is used, and therefore a fast and clear detection of differences in the computer networks are possible.

Preferably the network information and/or the device information comprise the physical position of the device. For example, the network information and/or the device information comprise the physical topology of the computer network. Alternatively, the device information comprises part of the physical topology. Particularly, the device information comprises the capabilities of the device.

In a preferred embodiment of the invention the network information and/or the network model comprise surround information, wherein the surround information comprise information about which device is connected with which other device and connected with which network port. Preferably the surrounding information contain the local topology around the device. Benefit of this embodiment is, that the surrounding information may be used for a fast reconstruction and comparison of the actual network and the network at a previous time, for example at initialization. Another example is at device replacement.

The detection unit is adopted to detect based on the distinction data a new device in the computer network. The detection unit is adopted to ascertain if the new device is a replacement device or an extension device in the computer network. Preferably the detection unit is adopted to ascertain if the new device is a replacement device or an extension device based on the surrounding information. For example, for a new device the local topology is compared with all the local topologies in the network model, whereby for a corresponding local topology the new device is a set as a replacement device. The main device comprises a configuration unit. The device information comprises configuration data. The configuration unit is adopted to import the configuration data of a replaced device in the corresponding replacement device. Advantage of this embodiment is, that the computer network enables a fast detection of replaced devices and an automatically configuration of the replaced devices, wherein only extension devices have to be configured by the user self.

Preferably, the main device and/or the devices in the computer network are running a network discovery protocol to discover the network topology and/or to discover the local topology around itself. In particular, the network discovery protocol is the Link Layer Discovery Protocol (LLDP).

Furthermore, the invention concerns a method for configuring a computer network with devices. Preferably, the computer network is according to one of the previous claims and/or the previous description. In a first step of the method the topology of the computer network and device information of the devices are discovered and provided as network information. The provided network information is compared with a network model. The method has a further step, wherein the differences between the network model and the network information are detected and provided as distinction data. A new device is discovered based on the distinction data. Further, based on the distinction data it is checked, if the new device is a replacement of a device and/or is an extension of the computer network.

Benefit of the method for configuring a computer network is, that the method enables the possibility to automatically detect, if a device in the computer network is replaced and/or if a new device in the computer network is a replacement or an extension of the computer network.

According to the invention, also a computer program with program code means for executing all steps of the method for configuring a computer network with devices is suggested. The program is adopted to execute all the steps if the program is executed on a computer, the main device and/or a device of the computer network.

### Brief description of the figures

Figure 1 a computer network after initialization;
Figure 2 the computer network of figure 1 with replacement devices and extension devices.

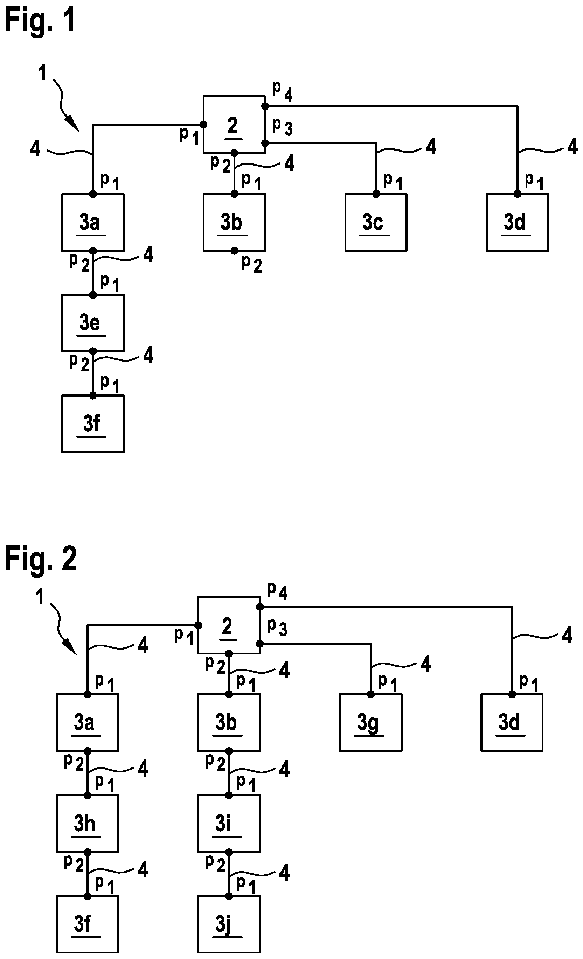

Figure 1 shows a computer network 1 comprising a main device 2 and several devices 3a, 3b, 3c, 3d, 3e and 3f. The main device 2 is for example a computer, a tablet computer or a phablet. The devices 3a to 3f are for example computers, delegate units, sensors or actors. The main device 2 comprises several network ports P1, P2, P3, P4, which are for example cable connectors or Wi-Fi-ports. The network ports P1, P2, P3, P4 and/or the main device 2 is adopted to run a network discovery protocol, for example the Link Layer Discovery Protocol (LLDP). The main device 2 is connected with several of the devices 3a-3f, in this example the devices 3a, 3b, 3c and 3d via a connection. The devices 3a to 3f comprise network ports, whereby each of the devices 3a to 3f comprise at least one network port or more network ports P1, P2. The main device 2 is connected via a network link 4 with the devices 3a, 3b, 3c and 3d, whereby the network port P1 of the main device 2 is connected with the network port P1 of the device 3a, the network port P2 of the main device 2 is connected with the network port P1 of the device 3b, the network port P3 of the main device 2 is connected with the network port P1 of the device 3c and the network port P4 of the main device 2 is connected with the network port P1 of the device 3d. The connection between two ports is done with a network link 4, whereby the network link 4 is for example a cable, alternatively the network link 4 is a Wi-Fi- or wireless connection.

The device 3a is connected with the device 3e, whereby the network port P2 of the device 3a is connected via a network link 4 with the network port P1 of the device 3e. The device 3e is connected with a device 3f, whereby the connection is done by connecting the network port P2 of the device 3e with the network port P1 of the device 3f. The network ports P1 and P2 of the devices 3a to 3f are also adopted to do a network discovery, for example by running a network discovery protocol like the LLDP.

The devices 3a to 3f are adopted to discover their neighbors and detect, which network port P1, P2 is connected with which neighbor and which network port of the neighbor, whereby the neighbor is another device 3a to 3f. The devices 3a to 3f are running die LLDP protocol, which is vendor neutral network protocol, that allows to advertise the other devices its presence and major capabilities. Especially, the devices 3a to 3f are adopted to discover the neighborhood and/or the local topology around their self, whereby the local topology is the physical and/or logical build-up of the network around itself. The devices 3a to 3f are adopted to provide the local topology, device information and/or further information to the main device 2. The device information for example comprise capabilities of the device 3a to 3f and/or configuration data.

The main device 2 is adopted to discover the whole topology of the network 1, for example by merging the local topologies. The main device 2 comprises a storage device, whereby the storage device is adopted to store a network model of the computer network 1. The network model comprises a defined topology of the computer network 1 and defined device information for the device of 3a to 3f. The defined topology and the defined device information are for example the topology of the computer network 1 and the device information of the devices 3a to 3f after initialization of the computer network 1. The main device 2 comprises a comparison unit, whereby the comparison unit is adopted to compare the network information with the actual network information, whereby the actual network information comprises the actual topology of the computer network 1 and the actual device information of the devices 3a to 3f. The comparison unit is further adopted to provide the differences between the network model and the actual network information as distinction data.

Figure 2 shows an evolution of the computer network 1 from figure 1. The devices 3c and 3e from figure 1 are replaced by new devices 3g and 3h. Further, two new devices 3i and 3j are introduced in the computer network 1 and are forming an extension of the computer network 1.

The device 3c from figure 1 is replaced by the device 3g, whereby the device 3g has a port P1, whereby the port P1 of the device 3g is connected with the port P3 of the main device 2. The comparison unit is adopted to compare the network information, especially the device information of the device 3g, with the network model, especially the device information of the device 3c.

The main device 2 comprises a detection unit, whereby the detection unit is adopted to ascertain, that the device 3g is a replacement of the device 3c in figure 1, whereby this ascertain is based on the information, that the device 3g is connected with the port P3 of the main device 2 and that the device 3g has the same capabilities as the device 3c from figure 1. The main device 2 further comprises a configuration unit, whereby the configuration unit is adopted to configure the device 3g, for example by using the configuration data from device 3c.

The device 3e from figure 1 is replaced by the device 3h in figure 2. The comparison unit is adopted to compare the network model with the actual network information. The detection unit is adopted to recognize, that the device 3h is the replacement for the device 3e in figure 1, whereby this detection is based on the information, that the device 3h is connected with the network port P2 of the device 3a and connected with the network port P1 of the device 3f. The configuration unit is adopted to configure the device 3h with the configuration data of the device 3e, whereby the configuration data of the device 3e are comprised by the network model.

The devices 3i and 3j are extension devices of the computer network and forming replacement devices 3i and 3j. The comparison unit of the main device 2 is adopted to compare the network model with the actual network information, whereby this comparison is providing the information, that the devices 3i and 3j are new devices. The detection unit detects this devices 3i and 3j as extension devices 3i and 3j, since there was no connection to the network port P2 of the device 3b.

## Claims

1. Main device (2) for use in a computer network (1),
wherein the computer network (1) has a topology and comprises a number of devices (3a, 3b, 3c, 3d, 3e, 3f, 3g, 3h, 3i, 3j), wherein each of the devices (3a, 3b, 3c, 3d, 3e, 3f, 3g, 3h, 3i, 3j) comprises device information and at least one network port (P1, P2), wherein the devices (3a, 3b, 3c, 3d, 3e, 3f, 3g, 3h, 3i, 3j) are interconnected with the computer network (1) by network links (4), each network link (4) connecting two respective network ports (P1, P2),
wherein the main device (1) is interconnected with at least one of the devices (3a, 3b, 3c, 3d) by a connection, whereby the main device (2) is adopted to obtain network information, whereby the network information comprise the topology of the computer network (1) and the device information of the devices in the network,
the main device (2) comprises a network model, wherein the network model comprises a defined topology of the computer network (1) and defined device information,
wherein the main device (2) comprises a comparison unit, wherein the comparison unit is adopted to compare the network information with the network model to provide the differences between the network information and the network model as distinction data,
**characterized in that**
the main device (2) comprises a detection unit, wherein the detection unit is adopted to detect based on the distinction data a new device (3g, 3h, 3i, 3j) in the computer network (1), wherein the detection unit is adopted to ascertain based on the distinction data if the new device is a replacement device (3g, 3h), whereby this ascertain is based on the information, that the replacement device (3g, 3h) has the same capabilities as a replaced device,
wherein all devices (3a, 3b, 3c, 3d, 3e, 3f, 3g, 3h, 3i, 3j) of the computer network (1) are main devices (2),
wherein the defined device information comprises configuration data of the replaced device, wherein the main device comprises a configuration unit, wherein the configuration unit is adopted to import the defined configuration data of the replaced device in the replacement device (3g, 3h).

2. Main device (2) as in claim 1, wherein the device information contains a unique address of the device.

3. Main device (2) as in claim 1 or 2, wherein the detection unit is adopted to ascertain based on the distinction data if the new device is an extension device (3i, 3j).

4. Computer network (1) comprising a main device (2) and a number of devices (3a, 3b, 3c, 3d, 3e, 3f, 3g, 3h, 3i, 3j), wherein each of the devices (3a, 3b, 3c, 3d, 3e, 3f, 3g, 3h, 3i, 3j) comprises device information and at least one network port (P1, P2), wherein the devices (3a, 3b, 3c, 3d, 3e, 3f, 3g, 3h, 3i, 3j) are interconnected with the computer network (1) by network links (4), each network link (4) connecting two respective network ports (P1, P2), wherein the computer network (1) has a topology,
wherein the main device (2) is interconnected with at least one of devices (3a, 3b, 3c, 3d) by a connection, whereby the main device (2) is adopted to obtain network information, whereby the network information comprise the topology of the computer network (1) and the device information of the devices (3a, 3b, 3c, 3d, 3e, 3f, 3g, 3h, 3i, 3j) in the network,
wherein the main device comprises a network model, wherein the network model comprises a defined topology of the computer network (1) and defined device information,
wherein the main device comprises a comparison unit, wherein the comparison unit is adopted to compare the network information with the network model to provide the differences between the network information and the network model as distinction data,
wherein the main device (2) comprises a detection unit, wherein the detection unit is adopted to detect based on the distinction data a new device (3g, 3h, 3i, 3j) in the computer network (1), wherein the detection unit is adopted to ascertain based on the distinction data if the new device is a replacement device (3g, 3h), whereby this ascertain is based on the information, that the replacement device (3g, 3h) has the same capabilities as a replaced device,
wherein all devices (3a, 3b, 3c, 3d, 3e, 3f, 3g, 3h, 3i, 3j) are main devices (2),
wherein the defined device information comprises configuration data of the replaced device, wherein the main device comprises a configuration unit, wherein the configuration unit is adopted to import the defined configuration data of the replaced device in the replacement device (3g, 3h).

5. Computer network (1) as in claim 4, wherein each of the devices (3a, 3b, 3c, 3d, 3e, 3f, 3g, 3h, 3i, 3j) has a unique address and is adopted to detect the unique address of its neighbors, wherein the device information of the device contain its own unique address and the unique addresses of the neighbors.

6. Computer network (1) as in claim 4 or 5, wherein the network information and/or the device information comprise the physical position of the device (3a, 3b, 3c, 3d, 3e, 3f, 3g, 3h, 3i, 3j).

7. Computer network (1) as in one of the claims 4 to 6, wherein the network information and/or the network model comprise surrounding information, wherein the surrounding information comprises information about which device (3a, 3b, 3c, 3d, 3e, 3f, 3g, 3h, 3i, 3j) is connected with which device and via which network ports (P1, P2).

8. Computer network (1) as in one of the claims 4 to 7, wherein the detection unit is adopted to detected based on the distinction data a new device (3g, 3h, 3i, 3j) in the computer network (1), wherein the detection unit is adopted to ascertain if the new device is a replacement device (3g, 3h) or an extension device (3i, 3j), wherein the device information comprise configuration data, wherein the main device (2) comprises a configuration unit, wherein the configuration unit is adopted to import the configuration data in the replacement device (3g, 3h).

9. Computer network (1) as in one of the claims 4 to 8, wherein the main device (2) and/or the devices (3a, 3b, 3c, 3d, 3e, 3f, 3g, 3h, 3i, 3j) are running a network discovery protocol to discover the topology of the computer network (1).

10. Method for configuring a computer network (1) according to one of the claims 4 to 9 with devices (3a, 3b, 3c, 3d, 3e, 3f, 3g, 3h, 3i, 3j),
wherein the topology of the computer network (1) and devices information of the devices (3a, 3b, 3c, 3d, 3e, 3f, 3g, 3h, 3i, 3j) are discovered and provided as network information,
wherein the provided network information are compared with a network model and differences between the network information and the network model are provided as distinction data, wherein a new device (3g, 3h, 3i, 3j) is discovered based on the distinction data, wherein based on the distinction data is checked if the new device is a replacement of a device (3g, 3h) and/or an extension of the computer network (1).

11. Computer program with program code means for executing all steps of the method of claim 10, when the program is executed on a computer and/or a main device (2) according to claim 1.

## Patentansprüche

1. Hauptvorrichtung (2) zur Verwendung in einem Computernetzwerk (1), wobei das Computernetzwerk (1) eine Topologie aufweist und eine Anzahl von Vorrichtungen (3a, 3b, 3c, 3d, 3e, 3f, 3g, 3h, 3i, 3j) aufweist, wobei jede der Vorrichtungen (3a, 3b, 3c, 3d, 3e, 3f, 3g, 3h, 3i, 3j) Vorrichtungsinformationen und mindestens einen Netzwerkanschluss (P1, P2) aufweist, wobei die Vorrichtungen (3a, 3b, 3c, 3d, 3e, 3f, 3g, 3h, 3i, 3j) über Netzwerkverbindungen (4) mit dem Computernetzwerk (1) verbunden sind, wobei jede Netzwerkverbindung (4) jeweils zwei Netzwerkanschlüsse (P1, P2) miteinander verbindet, wobei
die Hauptvorrichtung (1) über eine Verbindung mit mindestens einer der Vorrichtungen (3a, 3b, 3c, 3d) verbunden ist, wobei die Hauptvorrichtung (2) dazu ausgelegt ist, Netzwerkinformationen zu erfassen, wobei die Netzwerkinformationen die Topologie des Computernetzwerks (1) und die Vorrichtungsinformationen der Vorrichtungen im Netzwerk umfassen,
die Hauptvorrichtung (2) ein Netzwerkmodell aufweist, wobei das Netzwerkmodell eine definierte Topologie des Computernetzwerks (1) und definierten Vorrichtungsinformationen umfasst,
wobei die Hauptvorrichtung (2) eine Vergleichseinheit umfasst, wobei die Vergleichseinheit dazu ausgelegt ist, die Netzwerkinformationen mit dem Netzwerkmodell zu vergleichen, um die Unterschiede zwischen den Netzwerkinformationen und dem Netzwerkmodell als Unterscheidungsdaten bereitzustellen, **dadurch gekennzeichnet, dass**
die Hauptvorrichtung eine Detektionseinheit aufweist, wobei die Detektionseinheit dazu ausgelegt ist, auf der Grundlage der Unterscheidungsdaten eine neue Vorrichtung (3g, 3h, 3i, 3j) im Computernetzwerk (1) zu erkennen, wobei die Detektionseinheit dazu ausgelegt ist, auf der Grundlage der Unterscheidungsdaten festzustellen, ob es sich bei der neuen Vorrichtung um eine Austauschvorrichtung (3g, 3h) handelt, wobei diese Feststellung auf der Information beruht, dass die Austauschvorrichtung (3g, 3h) dieselben Fähigkeiten wie eine ausgetauschte Vorrichtung aufweist,
wobei alle Vorrichtungen (3a, 3b, 3c, 3d, 3e, 3f, 3g, 3h, 3i, 3j) des Computernetzwerks (1) Hauptvorrichtungen (2) sind,
wobei die definierten Vorrichtungsinformationen Konfigurationsdaten der ausgetauschten Vorrichtung aufweisen, wobei die Hauptvorrichtung eine Konfigurationseinheit umfasst, wobei die Konfigurationseinheit dazu ausgelegt ist, die definierten Konfigurationsdaten der ausgetauschten Vorrichtung in die Austauschvorrichtung (3g, 3h) zu importieren.

2. Hauptvorrichtung (2) nach Anspruch 1, wobei die Vorrichtungsinformationen eine eindeutige Adresse der Vorrichtung enthalten.

3. Hauptvorrichtung (2) nach Anspruch 1 oder 2, wobei die Detektionseinheit dazu ausgelegt ist, anhand der Unterscheidungsdaten festzustellen, ob es sich bei der neuen Vorrichtung um eine Erweiterungsvorrichtung (3i, 3j) handelt.

4. Computernetzwerk (1), das eine Hauptvorrichtung (2) und eine Anzahl von Vorrichtungen (3a, 3b, 3c, 3d, 3e, 3f, 3g, 3h, 3i, 3j) aufweist, wobei jede der Vorrichtungen (3a, 3b, 3c, 3d, 3e, 3f, 3g, 3h, 3i, 3j) Vorrichtungsinformationen und mindestens einen Netzwerkanschluss (P1, P2) aufweist, wobei die Vorrichtungen (3a, 3b, 3c, 3d, 3e, 3f, 3g, 3h, 3i, 3j) über Netzwerkverbindungen (4) mit dem Computernetzwerk (1) verbunden sind, wobei jede Netzwerkverbindung (4) jeweils zwei Netzwerkanschlüsse (P1, P2) miteinander verbindet, wobei das Computernetzwerk (1) eine Topologie aufweist,
wobei die Hauptvorrichtung (2) über eine Verbindung mit mindestens einer der Vorrichtungen (3a, 3b, 3c, 3d) verbunden ist, wobei die Hauptvorrichtung (2) dazu ausgelegt ist, Netzwerkinformationen zu erfassen, wobei die Netzwerkinformationen die Topologie des Computernetzwerks (1) und die Vorrichtungsinformationen der Vorrichtungen (3a, 3b, 3c, 3d, 3e, 3f, 3g, 3h, 3i, 3j) im Netzwerk umfassen,
wobei die Hauptvorrichtung ein Netzwerkmodell aufweist, wobei das Netzwerkmodell eine definierte Topologie des Computernetzwerks (1) und definierte Vorrichtungsinformationen aufweist,
wobei die Hauptvorrichtung eine Vergleichseinheit aufweist, wobei die Vergleichseinheit dazu ausgelegt ist, die Netzwerkinformationen mit dem Netzwerkmodell zu vergleichen, um die Unterschiede zwischen den Netzwerkinformationen und dem Netzwerkmodell als Unterscheidungsdaten bereitzustellen,
wobei die Hauptvorrichtung (2) eine Detektionseinheit aufweist, wobei die Detektionseinheit dazu ausgelegt ist, auf der Grundlage der Unterscheidungsdaten eine neue Vorrichtung (3g, 3h, 3i, 3j) im Computernetzwerk (1) zu erkennen, wobei die Detektionseinheit dazu ausgelegt ist, auf der Grundlage der Unterscheidungsdaten festzustellen, ob es sich bei der neuen Vorrichtung um eine Austauschvorrichtung (3g, 3h) handelt, wobei diese Feststellung auf der Information beruht, dass die Austauschvorrichtung (3g, 3h) dieselben Fähigkeiten wie eine ausgetauschte Vorrichtung aufweist,
wobei alle Vorrichtungen (3a, 3b, 3c, 3d, 3e, 3f, 3g, 3h, 3i, 3j) des Computernetzwerks (1) Hauptvorrichtungen (2) sind,
wobei die definierten Vorrichtungsinformationen Konfigurationsdaten der ausgetauschten Vorrichtung aufweisen, wobei die Hauptvorrichtung eine Konfigurationseinheit umfasst, wobei die Konfigurationseinheit dazu ausgelegt ist, die definierten Konfigurationsdaten der ausgetauschten Vorrichtung in die Austauschvorrichtung (3g, 3h) zu importieren.

5. Computernetzwerk (1) nach Anspruch 4, wobei jede der Vorrichtungen (3a, 3b, 3c, 3d, 3e, 3f, 3g, 3h, 3i, 3j) über eine eindeutige Adresse verfügt und dazu ausgelegt ist, die eindeutige Adresse ihrer Nachbarn zu erfassen, wobei die Vorrichtungsinformationen der Vorrichtung ihre eigene eindeutige Adresse sowie die eindeutigen Adressen der Nachbarn enthalten.

6. Computernetzwerk (1) nach Anspruch 4 oder 5, wobei die Netzwerkinformationen und/oder die Vorrichtungsinformationen die physikalische Position der Vorrichtung (3a, 3b, 3c, 3d, 3e, 3f, 3g, 3h, 3i, 3j) umfassen.

7. Computernetzwerk (1) nach einem der Ansprüche 4 bis 6, wobei die Netzwerkinformationen und/oder das Netzwerkmodell Umgebungsinformationen umfassen, wobei die Umgebungsinformationen Informationen darüber aufweisen, welche Vorrichtung (3a, 3b, 3c, 3d, 3e, 3f, 3g, 3h, 3i, 3j) mit welcher Vorrichtung und über welche Netzwerkanschlüsse (P1, P2) verbunden ist.

8. Computernetzwerk (1) nach einem der Ansprüche 4 bis 7, wobei die Detektionseinheit dazu ausgelegt ist, auf der Grundlage der Unterscheidungsdaten eine neue Vorrichtung (3g, 3h, 3i, 3j) im Computernetzwerk (1) zu erkennen, wobei die Detektionseinheit dazu ausgelegt ist, festzustellen, ob es sich bei der neuen Vorrichtung um eine Austauschvorrichtung (3g, 3h) oder eine Erweiterungsvorrichtung (3i, 3j) handelt, wobei die Vorrichtungsinformationen Konfigurationsdaten umfassen, wobei die Hauptvorrichtung (2) eine Konfigurationseinheit umfasst, wobei die Konfigurationseinheit dazu ausgelegt ist, die Konfigurationsdaten in die Austauschvorrichtung (3g, 3h) zu importieren.

9. Computernetzwerk (1) nach einem der Ansprüche 4 bis 8, wobei die Hauptvorrichtung (2) und/oder die Vorrichtungen (3a, 3b, 3c, 3d, 3e, 3f, 3g, 3h, 3i, 3j) ein Netzwerkerkennungsprotokoll ausführen, um die Topologie des Computernetzwerks (1) zu ermitteln.

10. Verfahren zum Konfigurieren eines Computernetzwerks (1) gemäß einem der Ansprüche 4 bis 9 mit Vorrichtungen (3a, 3b, 3c, 3d, 3e, 3f, 3g, 3h, 3i, 3j), wobei die Topologie des Computernetzwerks (1) und die Vorrichtungsinformationen der Vorrichtungen (3a, 3b, 3c, 3d, 3e, 3f, 3g, 3h, 3i, 3j) ermittelt und als Netzwerkinformationen bereitgestellt werden,
wobei die bereitgestellten Netzwerkinformationen mit einem Netzwerkmodell verglichen werden und Unterschiede zwischen den Netzwerkinformationen und dem Netzwerkmodell als Unterscheidungsdaten bereitgestellt werden, wobei eine neue Vorrichtung (3g, 3h, 3i, 3j) auf der Grundlage der Unterscheidungsdaten ermittelt wird, wobei auf der Grundlage der Unterscheidungsdaten geprüft wird, ob die neue Vorrichtung einen Ersatz für eine Vorrichtung (3g, 3h) und/oder eine Erweiterung des Computernetzwerks (1) darstellt.

11. Computerprogramm mit Programmcode zum Ausführen aller Schritte des Verfahrens nach Anspruch 10, wenn das Programm auf einem Computer und/oder mit einer Hauptvorrichtung (2) gemäß Anspruch 1 ausgeführt wird.

## Revendications

1. Dispositif principal (2) destiné à être utilisé dans un réseau informatique (1),
dans lequel le réseau informatique (1) possède une topologie et comprend un certain nombre de dispositifs (3a, 3b, 3c, 3d, 3e, 3f, 3g, 3h, 3i, 3j), dans lequel chacun des dispositifs (3a, 3b, 3c, 3d, 3e, 3f, 3g, 3h, 3i, 3j) comprend des informations de dispositif et au moins un port de réseau (P1, P2), dans lequel les dispositifs (3a, 3b, 3c, 3d, 3e, 3f, 3g, 3h, 3i, 3j) sont interconnectés au réseau informatique (1) par des liaisons de réseau (4), chaque liaison de réseau (4) connectant deux ports de réseau respectifs (P1, P2),
dans lequel le dispositif principal (1) est interconnecté avec au moins un des dispositifs (3a, 3b, 3c, 3d) par une connexion, le dispositif principal (2) étant conçu pour obtenir des informations de réseau, les informations de réseau comprenant la topologie du réseau informatique (1) et les informations de dispositif concernant les dispositifs dans le réseau,
le dispositif principal (2) comprend un modèle de réseau, dans lequel le modèle de réseau comprend une topologie définie du réseau informatique (1) et des informations de dispositif définies,
dans lequel le dispositif principal (2) comprend une unité de comparaison, dans lequel l'unité de comparaison est conçue pour comparer les informations de réseau avec le modèle de réseau afin de fournir les différences entre les informations de réseau et le modèle de réseau sous forme de données de distinction,
**caractérisé en ce que**
le dispositif principal (2) comprend une unité de détection, dans lequel l'unité de détection est conçue pour détecter, sur la base des données de distinction, un nouveau dispositif (3g, 3h, 3i, 3j) dans le réseau informatique (1), dans lequel l'unité de détection est conçue pour déterminer, sur la base des données de distinction, si le nouveau dispositif est un dispositif de remplacement (3g, 3h), cette détermination étant basée sur l'information que le dispositif de remplacement (3g, 3h) possède les mêmes capacités qu'un dispositif remplacé,
dans lequel tous les dispositifs (3a, 3b, 3c, 3d, 3e, 3f, 3g, 3h, 3i, 3j) du réseau informatique (1) sont des dispositifs principaux (2),
dans lequel les informations de dispositif définies comprennent des données de configuration du dispositif remplacé, dans lequel le dispositif principal comprend une unité de configuration, dans lequel l'unité de configuration est conçue pour importer les données de configuration définies du dispositif remplacé dans le dispositif de remplacement (3g, 3h).

2. Dispositif principal (2) selon la revendication 1, dans lequel les informations de dispositif contiennent une adresse unique du dispositif.

3. Dispositif principal (2) selon la revendication 1 ou 2, dans lequel l'unité de détection est conçue pour déterminer, sur la base des données de distinction, si le nouveau dispositif est un dispositif d'extension (3i, 3j).

4. Réseau informatique (1) comprenant un dispositif principal (2) et un certain nombre de dispositifs (3a, 3b, 3c, 3d, 3e, 3f, 3g, 3h, 3i, 3j), dans lequel chacun des dispositifs (3a, 3b, 3c, 3d, 3e, 3f, 3g, 3h, 3i, 3j) comprend des informations de dispositif et au moins un port de réseau (P1, P2), dans lequel les dispositifs (3a, 3b, 3c, 3d, 3e, 3f, 3g, 3h, 3i, 3j) sont interconnectés au réseau informatique (1) par des liaisons de réseau (4), chaque liaison de réseau (4) connectant deux ports de réseau respectifs (P1, P2), dans lequel le réseau informatique (1) possède une topologie,
dans lequel le dispositif principal (2) est interconnecté avec au moins un des dispositifs (3a, 3b, 3c, 3d) par une connexion, dans lequel le dispositif principal (2) est conçu pour obtenir des informations de réseau, dans lequel les informations de réseau comprennent la topologie du réseau informatique (1) et les informations de dispositif concernant les dispositifs (3a, 3b, 3c, 3d, 3e, 3f, 3g, 3h, 3i, 3j) dans le réseau,
dans lequel le dispositif principal comprend un modèle de réseau, dans lequel le modèle de réseau comprend une topologie définie du réseau informatique (1) et des informations de dispositif définies,
dans lequel le dispositif principal comprend une unité de comparaison, dans lequel l'unité de comparaison est conçue pour comparer les informations de réseau avec le modèle de réseau afin de fournir les différences entre les informations de réseau et le modèle de réseau sous forme de données de distinction,
dans lequel le dispositif principal (2) comprend une unité de détection, dans lequel l'unité de détection est conçue pour détecter, sur la base des données de distinction, un nouveau dispositif (3g, 3h, 3i, 3j) dans le réseau informatique (1), dans lequel l'unité de détection est conçue pour déterminer, sur la base des données de distinction, si le nouveau dispositif est un dispositif de remplacement (3g, 3h), cette détermination étant basée sur l'information que le dispositif de remplacement (3g, 3h) possède les mêmes capacités qu'un dispositif remplacé,
dans lequel tous les dispositifs (3a, 3b, 3c, 3d, 3e, 3f, 3g, 3h, 3i, 3j) sont des dispositifs principaux (2),
dans lequel les informations de dispositif définies comprennent des données de configuration du dispositif remplacé, dans lequel le dispositif principal comprend une unité de configuration, dans lequel l'unité de configuration est conçue pour importer les données de configuration définies du dispositif remplacé dans le dispositif de remplacement (3g, 3h).

5. Réseau informatique (1) selon la revendication 4, dans lequel chacun des dispositifs (3a, 3b, 3c, 3d, 3e, 3f, 3g, 3h, 3i, 3j) possède une adresse unique et est conçu pour détecter l'adresse unique de ses voisins, dans lequel les informations de dispositif du dispositif contiennent sa propre adresse unique et les adresses uniques des voisins.

6. Réseau informatique (1) selon la revendication 4 ou 5, dans lequel les informations de réseau et/ou les informations de dispositif comprennent la position physique du dispositif (3a, 3b, 3c, 3d, 3e, 3f, 3g, 3h, 3i, 3j),

7. Réseau informatique (1) selon l'une des revendications 4 à 6, dans lequel les informations de réseau et/ou le modèle de réseau comprennent des informations d'environnement, dans lequel les informations d'environnement comprennent des informations précisant quel dispositif (3a, 3b, 3c, 3d, 3e, 3f, 3g, 3h, 3i, 3j) est connecté à quel dispositif et via quels ports de réseau (P1, P2).

8. Réseau informatique (1) selon l'une des revendications 4 à 7, dans lequel l'unité de détection est conçue pour détecter, sur la base des données de distinction, un nouveau dispositif (3g, 3h, 3i, 3j) dans le réseau informatique (1), dans lequel l'unité de détection est conçue pour déterminer si le nouveau dispositif est un dispositif de remplacement (3g, 3h) ou un dispositif d'extension (3i, 3j), dans lequel les informations de dispositif comprennent des données de configuration, dans lequel le dispositif principal (2) comprend une unité de configuration, dans lequel l'unité de configuration est conçue pour importer les données de configuration dans le dispositif de remplacement (3g, 3h).

9. Réseau informatique (1) selon l'une des revendications 4 à 8, dans lequel le dispositif principal (2) et/ou les dispositifs (3a, 3b, 3c, 3d, 3e, 3f, 3g, 3h, 3i, 3j) exécutent un protocole de découverte de réseau pour découvrir la topologie du réseau informatique (1).

10. Procédé de configuration d'un réseau informatique (1) selon l'une des revendications 4 à 9 avec des dispositifs (3a, 3b, 3c, 3d, 3e, 3f, 3g, 3h, 3i, 3j),
dans lequel la topologie du réseau informatique (1) et les informations de dispositif concernant les dispositifs (3a, 3b, 3c, 3d, 3e, 3f, 3g, 3h, 3i, 3j) sont découvertes et fournies en tant qu'informations de réseau,
dans lequel les informations de réseau fournies sont comparées avec un modèle de réseau et les différences entre les informations de réseau et le modèle de réseau sont fournies sous forme de données de distinction, dans lequel un nouveau dispositif (3g, 3h, 3i, 3j) est découvert sur la base des données de distinction, dans lequel il est vérifié sur la base des données de distinction si le nouveau dispositif constitue un remplacement d'un dispositif (3g, 3h) et/ou une extension du réseau informatique (1).

11. Programme informatique comportant des moyens formant code de programme permettant d'exécuter toutes les étapes du procédé selon la revendication 10, lorsque le programme est exécuté sur un ordinateur et/ou sur un dispositif principal (2) selon la revendication 1.
